# FASCICULE DE BREVET EUROPEEN

(11) **EP 0 718 734 B1**
(45) Date de publication et mention de la délivrance du brevet: **14.07.1999**
(21) Numéro de dépôt: 95402641.5
(22) Date de dépôt: 23.11.1995
(51) Int. Cl.: G05D 1/08

(54) **Système de manche cyclique à gradient d'effort pour hélicoptère**
Zyklisches Steuerungssystem mit Kraftgradientenrückführung für Hubschrauber
Cyclic control stick system with gradient of increasing effort feedback for helicopter

(30) Priorité: 22.12.1994 FR 9415466
(43) Date de publication de la demande: 26.06.1996
(73) Titulaire: EUROCOPTER, F-13725 Marignane Cédex (FR)
(72) Inventeur: Rollet, Philippe Alain Jean, F-13880 Velaux (FR); Bellera, Jacques Serge Louis, F-13100 Aix-en-Provence (FR)
(74) Mandataire: Bonnetat, Christian

(56) Documents cités:
- EP-A- 0 160 834
- GB-A- 2 095 867
- GB-A- 2 140 174

## Description

La présente invention concerne un système de manche cyclique pour hélicoptère, permettant à un pilote de ressentir des efforts de commande différents, selon le cas de vol et le degré d'agressivité des manoeuvres autour des axes de roulis et de tangage. Elle s'applique quelle que soit la réalisation du manche cyclique proprement dit, et notamment aux minimanches associés aux commandes de vol électriques.

On sait que, sur un hélicoptère, la position statique des commandes de vol commandant le roulis et le tangage évolue en fonction des conditions de vol. Si ces commandes incorporent un ressort engendrant un gradient d'effort, le pilote est amené à recentrer les efforts ressentis au manche par une action sur les dispositifs de recentrage des efforts (généralement appelés "trim release" en aéronautique), chaque fois que ces conditions de vol (vitesse d'avancement, puissance motrice appliquée) évoluent. Un tel recentrage annule les efforts statiques de commande nuisibles pour le confort du pilote et pour la précision du pilotage.

Cependant, le fréquent besoin de recentrage des efforts au manche cyclique engendre une charge de travail importante que certains pilotes trouvent gênante. Aussi, pour diminuer cette charge de travail, on a déjà proposé des dispositifs tendant à annuler automatiquement les efforts après un certain temps. Il s'agit essentiellement :
- des dispositifs de recentrage suiveurs qui asservissent, avec une certaine dynamique, la position d'ancrage du ressort (référence des efforts nuls) sur la position courante du manche. De tels dispositifs sont notamment prévus sur les hélicoptères devant effectuer des vols tactiques près du sol (vol "NOE", c'est-à-dire Nap Of the Hearth ou encore Vol Tactique en français), pour lesquels la vitesse et la puissance évoluent constamment ;
- des dispositifs de recentrage intégral, qui injectent en série dans la commande un ordre proportionnel à l'intégrale temporelle de l'ordre direct du manche. Le pilote est alors naturellement incité à ramener le manche cyclique au neutre des efforts au fur et à mesure que l'ordre injecté par l'intégrateur rejoint la valeur initialement commandée par l'ordre direct de manche. Ce type de recentrage permet d'utiliser un manche (ou minimanche) à point d'ancrage fixe, sans moteurs de recentrage.

Tous ces systèmes connus présentent en commun l'inconvénient d'annuler les efforts uniquement en fonction de paramètres temporels, et donc de supprimer toute sensation tactile au manche pendant les manoeuvres de grandes amplitudes ou à l'approche des butées de commande. En particulier, les systèmes de recentrage suiveurs font disparaître l'évolution des efforts en fonction du facteur de charge vertical (efforts par "g"), alors que cette évolution produit une sensation tactile facilitant le pilotage du facteur de charge en manoeuvre, sensation qui est, par ailleurs, exigée par les normes de qualités de vol militaires.

En conséquence, l'objet principal de la présente invention est un système de manche cyclique qui gère les efforts artificiels au manche (ou minimanche) en roulis et/ou en tangage, qui annule automatiquement les efforts statiques lorsque les conditions de vol sont stabilisées, et qui conserve les efforts transitoires pendant les manoeuvres, procurant ainsi au pilote un retour d'information tactile facilitant le dosage des actions au manche.

La présente invention permet non seulement de conserver des efforts sur le manche (ou minimanche) cyclique durant l'exécution de la manoeuvre, mais aussi de faire varier artificiellement ces efforts en fonction de paramètres extérieurs à l'équipement du manche, par exemple le degré d'agressivité des manoeuvres effectuées autour des axes de roulis et de tangage (mesure de facteur de charge ou de vitesses angulaires).

De même, elle peut intégrer un dispositif de gestion des efforts artificiels au manche (ou minimanche) commandant le roulis et le tangage permettant au pilote de ressentir de façon tactile l'approche des butées de commande sur ces deux axes.

La présente invention peut éventuellement être couplée avec un dispositif de tenue automatique, par exemple une tenue d'assiette. La logique de mise à jour de la référence d'assiette dépend de choix opérationnels définis par les pilotes. Un exemple possible est la mise à jour de l'assiette de référence systématiquement sur passage en mode "non piloté", ce qui a pour effet de tenir l'assiette courante, dès que les efforts ont été annulés.

A cette fin, selon l'invention, le système de manche cyclique pour un hélicoptère comportant des moyens délivrant en continu des paramètres représentatifs de l'état de vol actuel dudit hélicoptère, ledit système comportant un manche cyclique déplaçable, par un pilote, dans deux directions différentes correspondant respectivement au pilotage en tangage et au pilotage en roulis dudit hélicoptère, ledit système de manche cyclique comportant, pour au moins une direction de déplacement dudit manche cyclique pour laquelle des moyens élastiques de rappel dudit manche cyclique sont prévus pour exercer une action antagoniste à celle exercée par ledit pilote sur ledit manche cyclique dans ladite direction, un moteur susceptible de déplacer un organe mobile auquel sont attachés, à un point d'attache, lesdits moyens élastiques de rappel, est caractérisé en ce qu'il comporte de plus :
- des moyens pour délivrer la différence entre un premier signal électrique représentatif des positions dudit manche cyclique dans ladite direction et un second signal électrique représentatif des positions dudit point d'attache ;
- une liaison pour adresser ladite différence audit moteur ; et
- un premier interrupteur commandable interposé dans ladite liaison et commandé à partir d'au moins un desdits moyens délivrant lesdits paramètres représentatifs de l'état de vol, de façon que :
   . dans sa position de fermeture, ledit premier interrupteur assure la continuité de ladite liaison, lorsque ledit paramètre est inférieur à un seuil de référence, de sorte qu'alors ledit moteur est alimenté par ladite différence entre lesdits premier et second signaux électriques et que le déplacement dudit organe mobile par ledit moteur tend à annuler ladite action antagoniste desdits moyens élastiques de rappel ;
   . dans sa position d'ouverture, ledit premier interrupteur coupe ladite liaison, lorsque ledit paramètre est supérieur audit seuil de référence, de sorte qu'alors ledit moteur n'est pas alimenté et que l'action antagoniste desdits moyens élastiques de rappel s'exerce totalement sur ledit manche cyclique déplacé dans ladite direction.

Ainsi, le système élaborant les ordres de commande en tangage et/ou en roulis, résultant du ou des déplacements dudit manche cyclique et adressés au(x) rotor(s), engendre également des ordres pour déplacer le neutre des efforts (point d'attache ou d'ancrage), ces ordres étant élaborés par le système en fonction de divers paramètres de vol, de façon que le neutre des efforts sur l'axe de tangage ou l'axe de roulis soit centré sur la position courante du manche ou minimanche dès lors que ledit premier interrupteur est en position fermée et assure la liaison entre l'entrée et la sortie.

En position de fermeture dudit premier interrupteur, ledit système de manche cyclique bénéficie d'un recentrage automatique des efforts en continu, qui annule les efforts statiques résiduels. En revanche, en position d'ouverture dudit premier interrupteur, le pilote ressent pleinement l'action antagoniste desdits moyens élastiques de rappel, ce qui lui permet de mieux doser son action sur le manche cyclique.

Le pilote ressent donc des efforts de commande variables selon le cas de vol.

On remarquera que le document EP-A-0160834 décrit déjà un système de manche cyclique conforme au préambule de la présente revendication 1. Cependant, le but de ce système de manche cyclique antérieur est de stabiliser la force de commande sur ce dernier et, à cet effet, ledit moteur est alimenté par un signal électrique fonction de la vitesse de vol de l'hélicoptère.

Dans la présente invention, ladite différence représentative de l'écart entre la position du manche cyclique et la position d'ancrage peut être obtenue de plusieurs façons différentes. Par exemple, elle pourrait être calculée dans le pilote automatique ou dans le système de commandes de vol électriques (s'ils existent). Dans ce cas, lesdits moyens pour délivrer ladite différence ne seraient que des moyens de transmission de ladite différence entre l'emplacement de son calcul et ledit système de manche cyclique. En variante, ladite différence peut être élaborée directement dans ledit système de palonnier. A cet effet, ledit système de palonnier peut comporter de plus :
- au moins un premier capteur de position, associé audit manche cyclique et engendrant ledit premier signal électrique représentatif des positions dudit manche cyclique dans ladite direction ;
- au moins un second capteur de position, associé audit point d'attache et engendrant ledit second signal électrique représentatif des positions dudit point d'attache ; et
- un soustracteur pour effectuer la différence entre lesdits premier et second signaux électriques,
tandis que ladite liaison relie la sortie dudit soustracteur et ledit moteur.

Bien entendu, un tel soustracteur peut ne pas être formé par un dispositif discret particulier, mais être constitué par une partie d'un système de calcul plus complexe.

De préférence, dans ladite liaison, on dispose de plus des moyens de réglage, tel qu'un amplificateur à gain variable, permettant d'ajuster, en position de fermeture dudit premier interrupteur, la sensation tactile ressentie par le pilote actionnant ledit manche cyclique dans ladite direction.

Dans un exemple de réalisation particulièrement simple du système de manche cyclique conforme à la présente invention, on utilise, comme paramètres représentatifs de l'état dudit hélicoptère, la vitesse angulaire dudit hélicoptère autour de l'axe de pilotage correspondant à ladite direction de déplacement dudit manche cyclique. Dans ce cas, ledit système comporte des premiers moyens de comparaison permettant de comparer en continu ladite vitesse angulaire à un seuil de référence correspondant, lesdits premiers moyens de comparaison commandant ledit premier interrupteur commandé, de façon que celui-ci soit, respectivement, en position de fermeture si ladite vitesse angulaire est inférieure audit seuil de référence et en position d'ouverture si ladite vitesse angulaire est supérieure audit seuil de référence.

De préférence, lesdits paramètres représentatifs de l'état dudit hélicoptère comprennent de plus la vitesse air dudit hélicoptère, et le système de l'invention comporte un générateur pour engendrer ledit seuil de référence comme une fonction de ladite vitesse air. Une telle fonction peut être telle que ledit seuil de référence est inversement proportionnel à la vitesse air ou bien que ledit seuil de référence est constant à basse vitesse dudit hélicoptère et est inversement proportionnel à ladite vitesse air pour des vitesses élevées dudit hélicoptère.

Avantageusement, le système de manche cyclique conforme à la présente invention comporte de plus :
- des deuxièmes moyens de comparaison permettant de comparer en continu ledit second signal électrique représentatif des positions dudit point d'attache avec au moins un seuil de référence représentatif d'au moins une position proche d'une butée d'extrémité du manche cyclique ; et
- un deuxième interrupteur commandable interposé sur ladite liaison, en aval dudit premier interrupteur, et commandé à l'ouverture par lesdits deuxièmes moyens de comparaison dans le cas où la valeur dudit second signal électrique dépasse ledit seuil de référence.

Ainsi, on reconstitue pour le pilote l'approche tactile des butées d'extrémité de course du manche cyclique, puisque, à l'ouverture dudit deuxième interrupteur, la motorisation automatique du manche cyclique est gelée et le pilote actionne ledit manche cyclique à l'encontre de l'action desdits moyens élastiques de rappel. L'apparition de l'effort en pilotage combiné avec la position du bras avertit le pilote de l'approche de la butée avant que celle-ci ne soit atteinte. Lorsque la position du point d'attache (point d'ancrage) entre dans une zone proche de butées délimitée par ledit ou lesdits seuils, par exemple à 10% de la butée, la fonction de recentrage automatique est gelée par annulation de la consigne envoyée au moteur. La fonction de commande automatique du recentrage n'intervient donc que sur une plage réduite du débattement total du manche cyclique.

On voit ainsi que le recentrage des efforts sur l'axe (roulis ou tangage) concerné est actif dès lors que la vitesse angulaire sur cet axe reste inférieure à un certain seuil pouvant éventuellement être lui-même variable en fonction d'autres paramètres, comme la vitesse air, et que les ordres envoyés au(x) rotor(s) ne conduisent pas à s'approcher trop près des butées de commande sur cet axe.

Sur évolutions douces et progressives, lorsque la vitesse angulaire reste en dessous du seuil fixé et que la commande d'axe n'est pas trop près des butées, le système fonctionne en suiveur et l'effort au manche (ou minimanche) sur l'axe concerné par la manoeuvre est annulé en permanence, moyennant une certaine constante de temps dépendant de la dynamique de l'asservissement.

Sur évolutions rapides et de grandes amplitudes ou lorsque la commande d'axe approche des butées, le système maintient le point d'ancrage et le pilote ressent l'effort de rappel du manche sur l'axe concerné pendant la manoeuvre, d'où une sensation tactile facilitant le dosage de l'ordre de commande. Lorsque le pilote restabilise l'hélicoptère en fin de manoeuvre, la vitesse angulaire est amenée à tomber en dessous du seuil d'où un recentrage automatique de l'effort sur l'axe concerné, sauf si l'on est proche des butées. Dans ce cas, seule une action volontaire du pilote sur le dispositif de recentrage manuel peut déplacer le point d'ancrage du manche vers la butée.

De ce qui vient d'être décrit, on comprendra aisément que le système de manche cyclique conforme à l'invention peut être associé à une timonerie mécanique pour commander l'hélicoptère en tangage et/ou en roulis. Cependant, il est tout particulièrement approprié à être utilisé en association avec un système de commande de vol électrique. Dans ce dernier cas, au moins une partie dudit système de manche cyclique (à l'exception du manche cyclique lui-même) peut être intégrée dans ledit système de commande de vol électrique.

Dans le cas où ledit système de commande de vol électrique comporte un dispositif de pilotage automatique destiné à assurer des tenues automatiques dudit hélicoptère autour de l'axe de pilotage correspondant à ladite direction de déplacement dudit manche cyclique, telle que tenue d'assiette, il est avantageux de prévoir de plus :
- un détecteur de l'état de pilotage humain ou de l'état de pilotage automatique dudit hélicoptère autour dudit axe de pilotage ; et
- un aiguilleur à deux voies interposé sur ladite liaison, en aval dudit premier interrupteur, et commandé par ledit détecteur, soit pour assurer la continuité de ladite liaison, soit pour relier ledit dispositif de pilotage automatique audit moteur.

Ainsi, le système de manche cyclique conforme à la présente invention est totalement compatible avec des modes de pilotage automatique du type tenue d'assiette, qui nécessitent la motorisation du manche cyclique pour le recentrage des organes de commande lorsque le pilote n'est pas actif.

Le système de manche cyclique selon l'invention est donc susceptible de permettre les deux modes de fonctionnement suivants :
- le mode piloté, dans lequel le pilote agit sur le manche cyclique, les fonctions de tenues automatiques étant alors inhibées et la fonction de recentrage automatique des efforts sur le manche cyclique étant active ;
- le mode automatique, dans lequel le pilote n'agit pas sur le manche cyclique, les fonctions de tenues automatiques étant actives et motorisant le manche cyclique pour recentrer les organes de commande (vérin série du pilote automatique, par exemple), tandis que la fonction de recentrage automatique des efforts sur le manche cyclique est inactive.

Ledit détecteur, destiné à détecter l'état actuel de pilotage (humain ou automatique), peut être de différents types. Par exemple, il pourrait être constitué par un capteur d'effort mesurant directement l'effort exercé par la main du pilote sur le manche cyclique. Cependant, dans un mode de réalisation avantageux, on prévoit que la détection de l'état actuel de pilotage est basée sur la mesure de l'écart entre la position du manche cyclique et la position d'ancrage courante desdits moyens élastiques de rappel dudit manche cyclique.

Dans ce cas, ledit détecteur peut être formé par des troisièmes moyens de comparaison permettant de comparer en continu, avec un seuil de référence, ladite différence entre lesdits premier et second signaux électriques, lesdits troisièmes moyens de comparaison commandant ledit aiguilleur pour que celui-ci assure, d'une part, la continuité de ladite liaison lorsque ladite différence est supérieure audit seuil de référence et, d'autre part, la connexion dudit dispositif de pilotage automatique audit moteur lorsque ladite différence est inférieure audit seuil de référence.

On remarquera que le système de manche cyclique conforme à la présente invention peut opérer pour la direction de déplacement dudit manche cyclique correspondant au tangage ou pour celle correspondant au roulis, ou bien encore pour chacune de ces deux directions à condition de prévoir deux systèmes du type décrit ci-dessus. Dans ce dernier cas, certains éléments des deux systèmes de manche cyclique peuvent éventuellement être combinés.

Les figures du dessin annexé feront bien comprendre comment l'invention peut être réalisée. Sur ces figures, des références identiques désignent des éléments semblables.

La figure 1 montre le schéma synoptique d'un exemple de réalisation pour un système de commande de vol pour hélicoptère, incorporant un système de manche cyclique conforme à la présente invention, prévu pour le pilotage en tangage F1 et en roulis F2.

La figure 2 est le schéma synoptique d'un exemple de réalisation du système de manche cyclique conforme à la présente invention, destiné au pilotage en tangage.

Ainsi, l'invention décrite en regard de ces figures intègre les contraintes particulières relatives à l'axe de tangage. Elle annule les efforts lorsque le facteur de charge vertical engendré par la manoeuvre (ressource, virage) est faible, et les conserve dès lors que le facteur de charge vertical dépasse un certain seuil, permettant ainsi de satisfaire les exigences des normes de qualités de vol militaires, pour les efforts par "g" (efforts à tirer ou à pousser représentatifs du facteur de charge vertical).

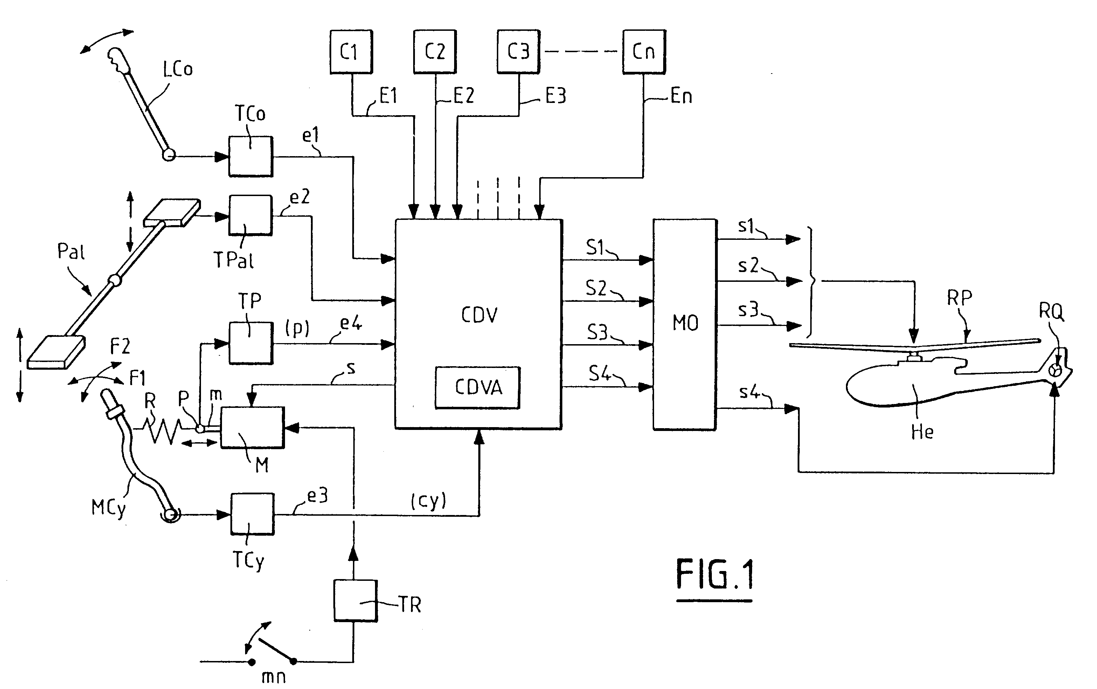

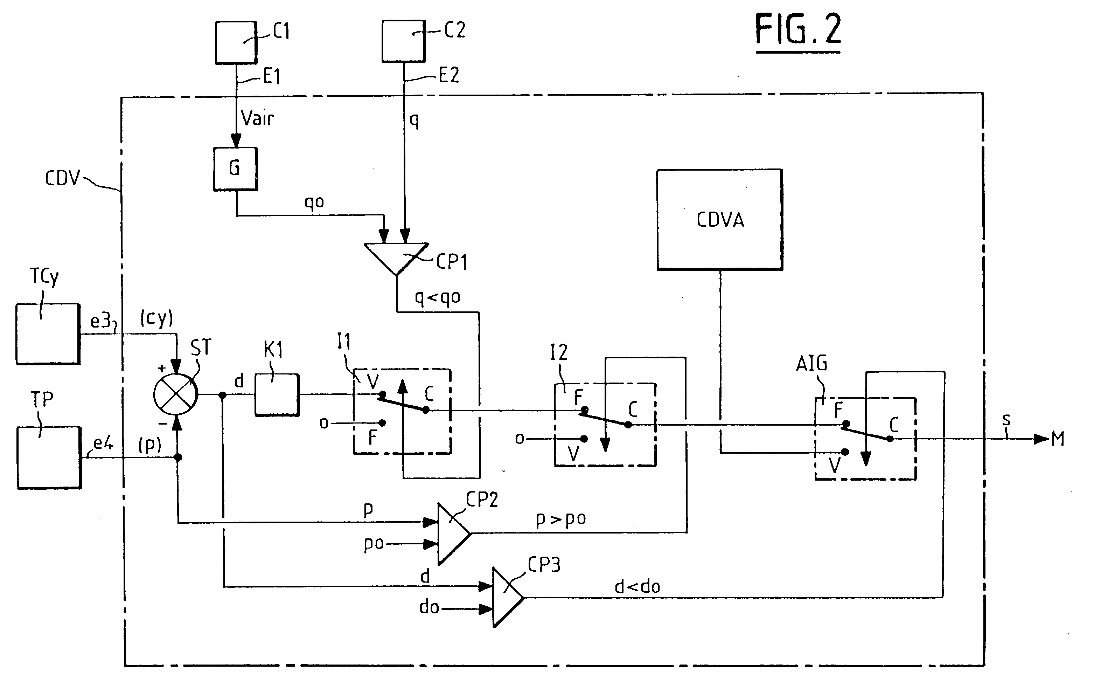

Les dispositifs représentés schématiquement par les figures 1 et 2 sont bien entendu montés à bord d'un hélicoptère He à piloter, bien que, pour des raisons de clarté de dessin, l'hélicoptère He soit représenté à petite échelle, extérieurement audit système, sur la figure 1. L'hélicoptère He comporte au moins un rotor principal RP destiné à assurer la sustentation, l'avance et la commande en tangage et en roulis, ainsi qu'un rotor de queue RQ ou tout autre dispositif (par exemple le système NOTAR du constructeur américain Mc DONNELL DOUGLAS) destiné à assurer l'équilibre latéral et, éventuellement, la commande en lacet de l'hélicoptère He.

L'exemple de réalisation de système de commande de vol pour hélicoptère, montré schématiquement sur la figure 1, comporte un dispositif de conduite de vol électrique CDV recevant une pluralité d'informations et émettant des ordres de commande. A cet effet, dans l'exemple représenté, au dispositif CDV sont associés :
- le levier de pas collectif LCo, associé à un transducteur TCo transformant les déplacements dudit levier en un signal électrique adressé au dispositif CDV par une liaison e1 ;
- le palonnier Pal, associé à un capteur de position TPal transformant les positions dudit palonnier en un signal électrique, adressé au dispositif CDV par une liaison e2 ;
- le manche de pas cyclique MCy, associé à un transducteur TCy transformant les positions dudit manche en tangage en un signal électrique cy, adressé au dispositif CDV par une liaison e3. Bien entendu, de façon connue, le manche de pas cyclique est déplaçable, d'une part, d'avant en arrière et d'arrière en avant pour le pilotage en tangage (double flèche F1) et, d'autre part, de gauche à droite et de droite à gauche pour le pilotage en roulis (double flèche F2). Cependant, sur les figures 1 et 2, on ne considère que le pilotage en tangage (flèche F1). De plus, bien que représenté sous la forme d'un grand manche, il va de soi que le manche cyclique MCy peut se présenter sous la forme d'un minimanche ;
- un dispositif de motorisation du manche cyclique MCy pour la commande en tangage, comportant au moins un moteur électrique M (par exemple du type vérin) agissant sur un organe mobile m relié audit manche cyclique MCy par un ressort de rappel R, s'opposant à l'action du pilote sur ledit manche cyclique ;
- un capteur de position TP, transformant les positions du point P, auquel le ressort de rappel R est attaché (ou ancré) sur l'organe mobile m en un signal électrique p, adressé au dispositif CDV par une liaison e4 ;
- une pluralité de n capteurs C1 à Cn, montés à bord de l'hélicoptère et délivrant sous forme de signaux électriques une pluralité d'informations sur les états dudit hélicoptère, telles que vitesse air, vitesses angulaires, accélérations angulaires, assiettes, facteurs de charge, etc ..., lesdites informations étant adressées au dispositif CDV par des liaisons E1 à En ;
- un mélangeur d'ordres MO recevant, par les liaisons S1 à S4, les ordres de commande élaborés par le dispositif CDV à partir des signaux adressés par les liaisons e1 à e4 et E1 à En et adressant des ordres de commande, par les liaisons s1 à s3, aux servocommandes du rotor principal RP et, par la liaison s4, à la servocommande du rotor de queue RQ ;
- une liaison s par laquelle le dispositif CDV adresse au moteur M du manche cyclique MCy des ordres de déplacements de l'organe mobile m et donc du point d'attache ou d'ancrage P ; et
- un dispositif TR de recentrage des efforts sur le manche cyclique MCy, commandé par une manette mn à la disposition du pilote.

Sur la figure 2, on a représenté un exemple de réalisation simple du système de manche cyclique conforme à la présente invention et constitué en partie par le dispositif de commande de vol CDV. Sur la figure 2, on n'a représenté que les liaisons servant à la motorisation du manche cyclique MCy en tangage. Cet exemple de réalisation, conforme à la présente invention, fait intervenir :
- le capteur de position en tangage TCy du manche cyclique MCy, engendrant le signal électrique cy sur la liaison e3, ledit signal cy étant représentatif des positions du manche cyclique en tangage ;
- le capteur de position TP, engendrant le signal électrique p sur la liaison e4, ledit signal p étant représentatif des positions du point d'attache P ;
- le capteur C1, engendrant sur la liaison E1 un signal électrique Vair représentatif de la vitesse de l'hélicoptère par rapport à l'air ; et
- le capteur C2, engendrant sur la liaison E2 un signal électrique q représentatif de la vitesse angulaire de tangage de l'hélicoptère.

Par ailleurs, la partie concernée dudit dispositif de commande de vol CDV comporte :
- un soustracteur ST, relié aux liaisons e3 et e4 et délivrant à sa sortie le signal d, représentatif de la différence cy-p ;
- un premier comparateur CP1, recevant le signal q engendré par le capteur C2 et le comparant à une valeur de référence qo ;
- un deuxième comparateur CP2, recevant le signal p engendré par le capteur de position TP et le comparant à une valeur de référence po ;
- un troisième comparateur CP3, recevant le signal d engendré par le soustracteur ST et le comparant à une valeur de référence do ;
- un dispositif de pilotage automatique CDVA réalisant les fonctions de tenues automatiques de l'hélicoptère He en tangage, telles que la tenue automatique d'assiette ;
- un premier interrupteur commandable I1 commandé par ledit premier comparateur CP1 et dont l'entrée de travail V est reliée à la sortie du soustracteur ST, par exemple par l'intermédiaire d'un amplificateur K1 à gain variable, de façon à recevoir le signal d. L'entrée de repos F de l'interrupteur I1 est au potentiel 0 ;
- un second interrupteur commandable I2 commandé par ledit deuxième comparateur CP2 et dont l'entrée de repos F est reliée à la sortie commune C dudit premier interrupteur I1, par exemple par l'intermédiaire d'un amplificateur K1 à gain variable. L'entrée de travail V de l'interrupteur I2 est au potentiel 0 ; et
- un aiguilleur à deux voies AIG commandé par ledit troisième comparateur CP3 et dont l'entrée de repos F et l'entrée de travail V sont respectivement reliées à la sortie commune C dudit second interrupteur I2 et à la sortie du dispositif de pilotage automatique CDVA.

Dans le dispositif de la figure 2 :
- le premier interrupteur I1 est commandé en position de travail --pour laquelle ledit soustracteur ST est relié au second interrupteur I2-- lorsque le premier comparateur CP1 reçoit un signal q inférieur à la référence qo ;
- le second interrupteur I2 est commandé en position de travail --pour laquelle la sortie s du dispositif CDV est isolée de la sortie commune C du premier interrupteur I1--lorsque le signal p est supérieur à la référence po ; et
- l'aiguilleur AIG est commandé par le troisième comparateur CP3 en position de travail --pour laquelle la sortie du dispositif CDVA est reliée à la sortie s-- lorsque le signal d est inférieur à la référence do.

Le seuil qo pourrait être constant, tout comme les seuils po et do. Cependant, comme cela est représenté sur la figure 2, il est préférable que le seuil qo soit engendré par un générateur G, à partir de la mesure en continu de la vitesse Vair de l'hélicoptère, délivrée par ledit capteur C1 sur la sortie E1. Ainsi, le seuil qo peut varier de façon inversement proportionnelle à la vitesse air Vair, ce qui revient à mettre un seuil sur le facteur de charge vertical. De préférence, le générateur G engendre une fonction qo qui est constante (par exemple égale à 3°/s) à faible vitesse de l'hélicoptère (par exemple entre 0 et 40 Kts), puis qui, au-delà d'un seuil de vitesse (40 Kts dans l'exemple ci-dessus), varie de façon inversement proportionnelle à Vair. Bien entendu, le seuil qo pourrait varier en fonction de la vitesse Vair selon d'autres lois engendrées par le générateur G.

Ainsi, lorsque les évolutions de l'hélicoptère He sont douces et progressives et que la vitesse angulaire en tangage q reste en dessous du seuil qo, la différence d est transmise au moteur M, à travers les interrupteurs I1, I2 et l'aiguilleur AIG. Par suite, le moteur M alimenté par la différence d annule en permanence l'effort en tangage par le déplacement du point P sur le manche cyclique MCy, moyennant une certaine constante de temps dépendant de la dynamique du système.

Dans le cas d'évolutions rapides et de grandes amplitudes de l'hélicoptère He, lorsque la vitesse angulaire en tangage q dépasse le seuil qo, le premier interrupteur I1 s'ouvre sous la commande du premier comparateur CP1, interrompant la liaison entre le soustracteur ST et le moteur M. Le système n'agit donc plus sur la position du point d'ancrage P et le pilote ressent l'effort de rappel exercé sur le manche cyclique MCy par le ressort R. Il en résulte, pour le pilote, une sensation tactile pendant la manoeuvre, qui facilite le dosage de l'ordre de commande en tangage. Lorsque le pilote restabilise l'assiette en fin de manoeuvre, la vitesse angulaire en tangage q diminue et repasse sous le seuil qo, de sorte que l'interrupteur I1 rebascule pour assurer de nouveau la continuité de la liaison entre le soustracteur ST et le moteur M, ce dernier assurant alors le recentrage automatique de l'effort exercé, en tangage, par le ressort R sur le manche MCy.

En virage stabilisé, il apparaît un taux de tangage stabilisé qui est fonction du facteur de charge et donc de l'inclinaison. Pour des inclinaisons modérées (par exemple inférieure à 30°), et donc des facteurs de charge faibles, le taux de tangage correspond à une vitesse angulaire q inférieure au seuil et les efforts sont recentrés en permanence. Pour des inclinaisons importantes, et donc des facteurs de charge élevés et des vitesses angulaires q élevées, le point d'ancrage P reste fixe et le pilote doit exercer un certain effort au manche pour maintenir le facteur de charge, ce qui en facilite le dosage.

De manière similaire, lorsque le pilote effectue des ressources douces, positives ou négatives, dans le plan vertical, le système annule l'effort au manche. Pour les ressources avec variations plus importantes de facteur de charge, le point d'ancrage P reste fixe et le pilote doit exercer un effort au manche, à tirer ou à pousser, pour maintenir le facteur de charge.

Pour expliquer le passage bidirectionnel entre le mode de pilotage en tangage au manche (pilotage humain) et le mode de pilotage en tangage en tenue automatique (pilotage par le dispositif CDVA), on suppose, dans l'explication ci-après, que l'on se trouve initialement en position stabilisée, avec les fonctions de tenue automatique activées, c'est-à-dire que l'aiguilleur AIG est en position de travail et relie le dispositif CDVA au moteur M.

Si le pilote souhaite changer de cas de vol, par exemple pour effectuer un changement d'assiette, il exerce un effort sur le manche MCy, de sorte qu'il engendre un écart de position entre ledit manche et le point P d'ancrage du ressort de rappel R sur l'organe mobile m. La différence d croît donc. Dès que la différence d devient égale ou supérieure à la référence do, le comparateur CP3 commande l'aiguilleur AIG pour qu'il passe en position de repos et relie le premier interrupteur I1 au moteur M. Les fonctions de tenues automatiques (exercées par le dispositif CDVA) sont donc alors inhibées.

Le passage rapide d'une assiette à une autre entraîne une variation importante de la vitesse angulaire de tangage q, qui reste supérieure au seuil qo. Par suite, comme cela a été expliqué ci-dessus, le premier interrupteur I1 coupe la liaison avec la sortie s. Le pilote agit donc contre les efforts appliqués sur le manche MCy par le ressort de rappel R.

Cependant, à l'approche de la nouvelle assiette désirée, le pilote, pour restabiliser l'hélicoptère, fait chuter la vitesse angulaire q. Dès que celle-ci devient inférieure en décroissant à la référence qo, le premier interrupteur I1 repasse en position de travail et le moteur M est de nouveau alimenté par la différence d, de sorte que l'effort de rappel du ressort R est recentré automatiquement.

Si la position statique du manche cyclique MCy a changé entre les deux cas de vol, le point d'attache P rallie la nouvelle position du manche, ce qui se traduit pour le pilote par la sensation de diminution automatique des efforts.

Dès que la position du point d'attache P a rejoint la position courante du manche cyclique, la différence d redevient inférieure à la référence do, de sorte que le comparateur CP3 commande l'aiguilleur AIG pour qu'il passe à sa position de travail, reliant le dispositif CDVA au moteur M.

Les fonctions de tenues automatiques en tangage sont donc de nouveau actives.

Par ailleurs, on remarquera que, grâce au deuxième comparateur CP2 et au second interrupteur I2, le pilote est averti de l'approche d'une butée du manche MCy. En effet, dès que ledit second signal électrique p atteint la valeur de référence po, le second interrupteur I2 est commandé à l'ouverture. Par suite, l'alimentation du moteur M est coupée et le pilote ressent l'effort croissant qu'il exerce sur le manche cyclique à l'encontre de l'action du ressort de rappel R. Le pilote est donc alerté de manière tactile de l'approche de la butée de manche cyclique, d'autant plus qu'il perçoit simultanément sa marge de commande par la position absolue de sa main et l'étirement de son bras.

On remarquera de plus que la fonction du deuxième comparateur CP2 peut être réalisée de différentes façons, notamment compte tenu du fait que ledit manche cyclique présente deux butées d'extrémité en tangage, ce qui nécessiterait donc deux valeurs de référence po.

Sur la figure 2, on a supposé que le deuxième comparateur CP2 comparait la valeur absolue du signal p à une référence po, c'est-à-dire que la marge de détection des deux butées d'extrémité était la même.

Par exemple, si l'on suppose que le manche cyclique présente un débattement, de part et d'autre d'une position neutre, de respectivement +50% et -50%, on peut prendre po égale à 40%, de sorte que le second interrupteur I2 sera ouvert dès que le manche cyclique s'approche de moins de 10% de chacune desdites butées d'extrémité.

Bien entendu, au lieu de ne prévoir qu'une valeur de référence po comme ci-dessus et de la comparer à la valeur absolue du signal p, il serait équivalent de définir deux valeurs de référence po1 et po2, chacune associée à une butée d'extrémité du manche cyclique MCy, et de comparer ledit signal p (et non plus sa valeur absolue) auxdites valeurs de références po1 et po2.

Dans l'exemple de réalisation du système de manche cyclique, conforme à la présente invention et illustré par les figures 1 et 2, on n'a considéré que l'axe de tangage (double flèche F1). Il est bien évident que la présente invention peut également s'appliquer à l'axe de roulis (double flèche F2), à condition que le ressort de rappel R et le moteur M exercent leur action en roulis et que le transducteur TCy fournisse un signal représentatif des déplacements du manche cyclique MCy en roulis. Dans ce deuxième cas, il faudrait prendre en compte la vitesse angulaire en roulis, au lieu de la vitesse angulaire en tangage q, et que le seuil po soit représentatif de l'approche des butées du manche MCy en roulis (double flèche F2).

Il est tout aussi évident que la présente invention peut s'appliquer également, à la fois en tangage et en roulis, pour un même manche cyclique MCy.

## Revendications

1. Système de manche cyclique pour un hélicoptère (He) comportant des moyens (C1 à Cn) délivrant en continu des paramètres représentatifs de l'état de vol actuel dudit hélicoptère, ledit système comportant un manche cyclique (MCy) déplaçable, par un pilote, dans deux directions différentes (F1, F2) correspondant respectivement au pilotage en tangage et au pilotage en roulis dudit hélicoptère (He),ledit système de manche cyclique comportant, pour au moins une direction de déplacement (F1 ou F2) dudit manche cyclique (MCg) pour laquelle des moyens élastiques de rappel (R) dudit manche cyclique sont prévus pour exercer une action antagoniste à celle exercée par ledit pilote sur ledit manche cyclique dans ladite direction, un moteur (M) susceptible de déplacer un organe mobile (m) auquel sont attachés, à un point d'attache (P), lesdits moyens élastiques de rappel (R), caractérisé en ce qu'il comporte de plus :
- des moyens pour délivrer la différence d entre un premier signal électrique (cy) représentatif des positions dudit manche cyclique dans ladite direction et un second signal électrique (p) représentatif des positions dudit point d'attache (P) ;
- une liaison (K1) pour adresser ladite différence (d) audit moteur (M) ; et
- un premier interrupteur commandable (I1) interposé dans ladite liaison et commandé à partir d'au moins un desdits moyens (C1 à Cn) délivrant lesdits paramètres représentatifs de l'état de vol, de façon que :
. dans sa position de fermeture, ledit premier interrupteur (Il) assure la continuité de ladite liaison, lorsque ledit paramètre est inférieur à un seuil de référence (qo), de sorte qu'alors ledit moteur (M) est alimenté par ladite différence (d) entre lesdits premier et second signaux électriques et que le déplacement dudit organe mobile (m) par ledit moteur (M) tend à annuler ladite action antagoniste desdits moyens élastiques de rappel (R) ;
. dans sa position d'ouverture, ledit premier interrupteur (I1) coupe ladite liaison, lorsque ledit paramètre est supérieur audit seuil de référence, de sorte qu'alors ledit moteur (M) n'est pas alimenté et que l'action antagoniste desdits moyens élastiques de rappel (R) s'exerce totalement sur ledit manche cyclique déplacé dans ladite direction.

2. Système de manche cyclique selon la revendication 1,
caractérisé en ce qu'il comporte, de plus :
- au moins un premier capteur de position (TCy), associé audit manche cyclique (MCy) et engendrant ledit premier signal électrique (cy) représentatif des positions dudit manche cyclique dans ladite direction ;
- au moins un second capteur de position (TP), associé audit point d'attache (P) et engendrant ledit second signal électrique (p) représentatif des positions dudit point d'attache (P) ;
- un soustracteur (ST) pour effectuer la différence (d) entre lesdits premier et second signaux électriques (cy et p) ; et
en ce que ladite liaison (K1) relie la sortie dudit soustracteur (ST) et ledit moteur (M).

3. Système de manche cyclique selon l'une des revendications 1 ou 2,
caractérisé en ce que des moyens de réglage (K1) sont prévus dans ladite liaison pour ajuster la sensation tactile ressentie par le pilote actionnant ledit manche cyclique (MCy) dans ladite direction (F1 ou F2).

4. Système de manche cyclique selon l'une des revendications 1 à 3, dans lequel lesdits paramètres représentatifs de l'état dudit hélicoptère comprennent au moins la vitesse angulaire dudit hélicoptère autour de l'axe de pilotage correspondant à ladite direction de déplacement (F1 ou F2) dudit manche cyclique (MCy),
caractérisé en ce qu'il comporte des premiers moyens de comparaison (CP1) permettant de comparer en continu ladite vitesse angulaire (q) à un seuil de référence (qo) correspondant, lesdits premiers moyens de comparaison (CP1) commandant ledit premier interrupteur commandé (I1), de façon que celui-ci soit, respectivement, en position de fermeture si ladite vitesse angulaire (q) est inférieure audit seuil de référence (qo) et en position d'ouverture si ladite vitesse angulaire est supérieure audit seuil de référence.

5. Système de manche cyclique selon la revendication 4, dans lequel lesdits paramètres représentatifs de l'état dudit hélicoptère comprennent de plus la vitesse air (Vair) dudit hélicoptère (He),
caractérisé en ce qu'il comporte un générateur (G) pour engendrer ledit seuil de référence (qo) comme une fonction de ladite vitesse air (Vair).

6. Système de manche cyclique selon la revendication 5,
caractérisé en ce que ledit seuil de référence (qo) est inversement proportionnel à la vitesse air (Vair).

7. Système de manche cyclique selon la revendication 5,
caractérisé en ce que ledit seuil de référence (qo) est constant à basse vitesse dudit hélicoptère (He) et est inversement proportionnel à ladite vitesse air (Vair) pour des vitesses élevées dudit hélicoptère (He).

8. Système de manche cyclique selon l'une quelconque des revendications 1 à 7,
caractérisé en ce qu'il comporte de plus :
- des deuxièmes moyens de comparaison (CP2) permettant de comparer en continu ledit second signal électrique (p) représentatif des déplacements dudit point d'attache avec au moins un seuil de référence (po) représentatif d'au moins une position proche d'une butée d'extrémité de la course du manche cyclique ; et
- un deuxième interrupteur commandable (I2) interposé sur ladite liaison, en aval dudit premier interrupteur, et commandé à l'ouverture par lesdits deuxièmes moyens de comparaison (CP2) dans le cas où la valeur dudit second signal électrique (p) dépasse ledit seuil de référence (po).

9. Système de manche cyclique selon l'une quelconque des revendications 1 à 8, pour un hélicoptère (He) pourvu d'un système de commande de vol électrique (CDV),
caractérisé en ce que ledit système de manche cyclique est au moins en partie intégré dans ledit système de commande de vol électrique (CDV).

10. Système de manche cyclique selon la revendication 9, pour un hélicoptère (He) dans lequel ledit système de commande de vol électrique (CDV) comporte un dispositif de pilotage automatique (CDVA) destiné à assurer des tenues automatiques dudit hélicoptère autour de l'axe de pilotage correspondant à ladite direction de déplacement (F1 ou F2) dudit manche cyclique,
caractérisé en ce qu'il comporte de plus :
- un détecteur (CP3) de l'état de pilotage humain ou de l'état de pilotage automatique dudit hélicoptère autour dudit axe de pilotage ; et
- un aiguilleur à deux voies (AIG) interposé sur ladite liaison, en aval dudit premier interrupteur (I1), et commandé par ledit détecteur (CP3), soit pour assurer la continuité de ladite liaison, soit pour relier ledit dispositif de pilotage automatique (CDVA) audit moteur (M).

11. Système de manche cyclique selon la revendication 10,
caractérisé en ce que ledit détecteur est formé par des troisièmes moyens de comparaison (CP3) permettant de comparer en continu, avec un seuil de référence (do), ladite différence (d) entre lesdits premier et second signaux électriques (cy et p), lesdits troisièmes moyens de comparaison (CP3) commandant ledit aiguilleur (AIG) pour que celui-ci assure, d'une part, la continuité de ladite liaison (K1) lorsque ladite différence (d) est supérieure audit seuil de référence (do) et, d'autre part, la connexion dudit dispositif de pilotage automatique (CDVA) audit moteur (M) lorsque ladite différence (d) est inférieure audit seuil de référence (do).

12. Système de manche cyclique selon l'une des revendications 1 à 11,
caractérisé en ce qu'il est prévu pour ladite direction de déplacement (F1) dudit manche cyclique correspondant au pilotage en tangage.

13. Système de manche cyclique selon l'une des revendications 1 à 12,
caractérisé en ce qu'il est prévu pour la direction (F2) dudit manche cyclique correspondant au pilotage en roulis.

## Patentansprüche

1. Zyklisches Steuerungssystem für einen Hubschrauber (He), das Mittel (C1 bis Cn) aufweist, die kontinuierlich Parameter liefern, die für den aktuellen Flugzustand des Hubschraubers charakteristisch sind, wobei das System einen zyklischen Steuerhebel (MCy) aufweist, der von einem Piloten in zwei verschiedenen Richtungen (F1, F2), die der Nicksteuerung bzw. der Rollsteuerung des Hubschraubers (He) entsprechen, verschiebbar ist, wobei das zyklische Steuerungssystem für wenigstens eine Verschiebungsrichtung (F1 oder F2) des zyklischen Steuerhebels (MCy), für welche elastische Rückstellmittel (R) für den zyklischen Steuerhebel vorgesehen sind, um eine Wirkung auszuüben, die derjenigen entgegenwirkt, die vom Piloten auf den zyklischen Steuerhebel in der wenigstens einen Richtung ausgeübt wird, einen Motor (M) aufweist, der in der Lage ist, ein bewegliches Element (m) zu verschieben, an welchem die elastischen Rückstellmittel (R) an einem Befestigungspunkt (P) befestigt sind, dadurch gekennzeichnet, daß es außerdem aufweist:
- Mittel zum Liefern der Differenz d zwischen einem ersten elektrischen Signal (cy), das für Positionen des zyklischen Steuerhebels in der wenigstens einen Richtung charakteristisch ist, und einem zweiten elektrischen Signal (p), das für Positionen des Befestigungspunktes (P) charakteristisch ist;
- eine Verbindung (Kl), um die Differenz an den Motor (M) zu schicken; und
- einen ersten betätigbaren Schalter (I1), der in die Verbindung eingesetzt ist und von wenigstens einem der Mittel (C1 bis Cn) aus betätigt wird, die die Parameter liefern, die für den Flugzustand charakteristisch sind, so daß:
. der erste Schalter (I1) in seiner Einschaltstellung die Kontinuität der Verbindung sicherstellt, wenn der besagte Parameter kleiner als eine Bezugsschwelle (qo) ist, so daß dann der Motor (M) mit der Differenz (d) zwischen dem ersten und zweiten elektrischen Signal versorgt wird und daß die Verschiebung des beweglichen Elements (m) durch den Motor (M) danach strebt, die Gegenwirkung der elastischen Rückstellmittel (R) aufzuheben;
. der erste Schalter (I1) in seiner Ausschaltstellung die Verbindung unterbricht, wenn der besagte Parameter größer als die Bezugsschwelle ist, so daß dann der Motor (M) nicht versorgt wird und daß die Gegenwirkung der elastischen Rückstellmittel (R) vollständig auf den in der wenigstens einen Richtung verschobenen zyklischen Steuerhebel ausgeübt wird.

2. Zyklisches Steuerungssystem nach Anspruch 1, dadurch gekennzeichnet, daß es außerdem aufweist:
- wenigstens einen ersten Positionssensor (TCy), der mit dem zyklischen Steuerhebel (MCy) verbunden ist und das erste elektrische Signal (cy) erzeugt, das für die Positionen des zyklischen Steuerhebels in der wenigstens einen Richtung charakteristisch ist;
- wenigstens einen zweiten Positionssensor (TP), der mit dem Befestigungspunkt (P) verbunden ist und das zweite elektrische Signal (p) erzeugt, das für die Positionen des Befestigungspunktes (p) charakteristisch ist; und
- ein Subtrahierglied (ST) zur Bereitstellung der Differenz (d) zwischen dem ersten und zweiten elektrischen Signal (cy und p); und
daß die Verbindung (K1) den Ausgang des Subtrahierglieds (ST) und den Motor (M) verbindet.

3. Zyklisches Steuerungssystem nach einem der Ansprüche 1 oder 2, dadurch gekennzeichnet, daß Einstellmittel (K1) in der Verbindung vorgesehen sind, um die vom Piloten, der den zyklischen Steuerhebel (MCy) in der Richtung (F1 oder F2) betätigt, gespürte Tastempfindung einzustellen.

4. Zyklisches Steuerungssystem nach einem der Ansprüche 1 bis 3, bei welchem die Parameter, die für den Zustand des Hubschraubers charakteristisch sind, wenigstens die Winkelgeschwindigkeit des Hubschraubers um die Steuerachse umfassen, die der Verschiebungsrichtung (F1 oder F2) des zyklischen Steuerhebels (MCy) entspricht, dadurch gekennzeichnet, daß es erste Vergleichsmittel (CP1) aufweist, die gestatten, kontinuierlich die Winkelgeschwindigkeit (q) mit einer entsprechenden Bezugsschwelle (qo) zu vergleichen, wobei die ersten Vergleichsmittel (CP1) den ersten betätigbaren Schalter (I1) betätigen, so daß sich dieser in Einschaltposition befindet, wenn die Winkelgeschwindigkeit (q) geringer als die Bezugsschwelle (qo) ist, und in Ausschaltposition befindet, wenn die Winkelgeschwindigkeit größer als die Bezugsschwelle ist.

5. Zyklisches Steuerungssystem nach Anspruch 4, bei welchem die Parameter, die für den Zustand des Hubschraubers charakteristisch sind, außerdem die Flugzeuggeschwindigkeit (Vair) des Hubschraubers (He) umfassen, dadurch gekennzeichnet, daß es einen Generator (G) zum Erzeugen der Bezugsschwelle (qo) als Funktion der Flugzeuggeschwindigkeit (Vair) aufweist.

6. Zyklisches Steuerungssystem nach Anspruch 5, dadurch gekennzeichnet, daß die Bezugsschwelle (qo) zur Flugzeuggeschwindigkeit (Vair) umgekehrt proportional ist.

7. Zyklisches Steuerungssystem nach Anspruch 5, dadurch gekennzeichnet, daß die Bezugsschwelle (qo) bei niedriger Geschwindigkeit des Hubschraubers (He) konstant und für erhöhte Geschwindigkeiten des Hubschraubers (He) zur Flugzeuggeschwindigkeit (Vair) umgekehrt proportional ist.

8. Zyklisches Steuerungssystem nach einem der Ansprüche 1 bis 7, dadurch gekennzeichnet, daß es außerdem aufweist
- zweite Vergleichsmittel (CP2), die gestatten, das zweite elektrische Signal (p), das für die Positionen des Befestigungspunktes charakteristisch ist, mit wenigstens einer Bezugsschwelle (po) kontinuierlich zu vergleichen, die für wenigstens eine Position nahe dem Endanschlag des Weges des zyklischen Steuerknüppels charakteristisch ist; und
- einen zweiten betätigbaren Schalter (I2), der nach dem des ersten Schalter in die Verbindung eingesetzt ist und von den zweiten Vergleichsmitteln (CP2) in dem Fall zum Öffnen betätigt wird, in dem der Wert des zweiten elektrischen Signals (p) die Bezugsschwelle (po) übersteigt.

9. Zyklisches Steuerungssystem nach einem der Ansprüche 1 bis 8 für einen Hubschrauber (He) der mit einem elektrischen Flugsteuerungssystem (CDV) versehen ist, dadurch gekennzeichnet, daß das zyklische Steuerungssystem wenigstens teilweise in das elektrische Flugsteuerungssystem (CDV) integriert ist.

10. Zyklisches Steuerungssystem nach Anspruch 9 für einen Hubschrauber (He), bei welchem das elektrische Flugsteuerungssystem (CDV) eine Autopiloteinrichtung (CDVA) aufweist, die dazu bestimmt ist, ein automatisches Halten des Hubschraubers um die Steuerachse herum sicherzustellen, die der Verschiebungsrichtung (F1 oder F2) des zyklischen Steuerhebels entspricht, dadurch gekennzeichnet, daß es außerdem aufweist:
- einen Detektor (CP3) für den Zustand der Steuerung durch einen Menschen oder den Zustand der automatischen Steuerung des Hubschraubers um die Steuerachse; und
- einen Zwei-Wege-Weichensteller (AIG), der nach dem ersten Schalter (I1) in die Verbindung eingesetzt ist und vom Detektor (CP3) gesteuert wird, entweder um die Kontinuität der Verbindung sicherzustellen, oder um die Autopiloteinrichtung (CDVA) mit dem Motor (M) zu verbinden.

11. Zyklisches Steuerungssystem nach Anspruch 10, dadurch gekennzeichnet, daß der Detektor aus dritten Vergleichsmitteln (CP3) besteht, die gestatten, die Differenz (d) zwischen dem ersten und zweiten elektrischen Signal (cy und p) kontinuierlich mit einer Bezugsschwelle (do) zu vergleichen, wobei die dritten Vergleichsmittel (CP3) den Weichensteller (AIG) steuern, damit dieser einerseits die Kontinuität der Verbindung (K1) sicherstellt, wenn die Differenz (d) größer als die Bezugsschwelle (do) ist, und andererseits die Verbindung der Autopiloteinrichtung (CDVA) mit dem Motor (M) sicherstellt, wenn die Differenz (d) geringer als die Bezugsschwelle (do) ist.

12. Zyklisches Steuerungssystem nach einem der Ansprüche 1 bis 11, dadurch gekennzeichnet, daß es für die Verschiebungsrichtung (F1) des zyklischen Steuerhebels vorgesehen ist, die der Nicksteuerung entspricht.

13. Zyklisches Steuerungssystem nach einem der Ansprüche 1 bis 12, dadurch gekennzeichnet, daß es für die Richtung (F2) des zyklischen Steuerhebels vorgesehen ist, die der Rollsteuerung entspricht.

## Claims

1. Cyclic stick system for a helicopter (He) including means (C1 to Cn) continuously delivering parameters representative of the current flight status of the said helicopter, the said system including a cyclic stick (MCy) which can be displaced, by a pilot, in two different directions (F1, F2) corresponding respectively to the piloting in pitch and to the piloting in roll of the said helicopter (He), the said cyclic stick system including, for at least one direction of displacement (F1 or F2) of the said cyclic stick (MCg) for which elastic return means (R) of the said cyclic stick are provided in order to exert an action counter to that exerted by the said pilot on the said cyclic stick in the said direction, a motor (M) capable of displacing a movable member (m) to which the said elastic return means (R) are attached, at an attachment point (P), characterized in that it additionally includes:
- means for delivering the difference d between a first electrical signal (cy) representative of the positions of the said cyclic stick in the said direction and a second electrical signal (p) representative of the positions of the said attachment point (P);
- a link (K1) for addressing the said difference (d) to the said motor (M); and
- a first controllable switch (I1) interposed in the said link and controlled from at least one of the said means (C1 to Cn) delivering the said parameters representative of the flight status, in such a way that:
• in its closed position, the said first switch (I1) provides the continuity of the said link, when the said parameter is below a reference threshold (qo), so that the said motor (M) is then supplied with the said difference (d) between the said first and second electrical signals and so that the displacement of the said movable member (m) by the said motor (M) tends to cancel out the said countering action of the said elastic return means (R);
• in its open position, the said first switch (I1) cuts the said link, when the said parameter is above the said reference threshold, so that then the said motor (M) is not supplied and so that the countering action of the said elastic return means (R) is exerted totally on the said cyclic stick displaced in the said direction.

2. Cyclic stick system according to Claim 1, characterized in that it additionally includes:
- at least one first position sensor (TCy), associated with the said cyclic stick (MCy) and generating the said first electrical signal (cy) representative of the positions of the said cyclic stick in the said direction;
- at least one second position sensor (TP), associated with the said attachment point (P) and generating the said second electrical signal (p) representative of the positions of the said attachment point (P);
- a subtractor (ST) for forming the difference (d) between the said first and second electrical signals (cy and p); and
in that the said link (K1) links the output of the said subtractor (ST) and the said motor (M).

3. Cyclic stick system according to either of Claims 1 and 2, characterized in that adjustment means (K1) are provided in the said link in order to adjust the tactile sensation felt by the pilot actuating the said cyclic stick (MCy) in the said direction (F1 or F2).

4. Cyclic stick system according to one of Claims 1 to 3, in which the said parameters representative of the status of the said helicopter comprise at least the angular speed of the said helicopter about the piloting axis corresponding to the said direction of displacement (F1 or F2) of the said cyclic stick (MCy), characterized in that it includes first comparison means (CP1) making it possible continuously to compare the said angular speed (q) with a corresponding reference threshold (qo), the said first comparison means (CP1) controlling the said first controlled switch (I1), in such a way that the latter is, respectively, in closed position if the said angular speed (q) is below the said reference threshold (qo) and in open position if the said angular speed is above the said reference threshold.

5. Cyclic stick system according to Claim 4, in which the said parameters representative of the status of the said helicopter additionally comprise the air speed (Vair) of the said helicopter (He), characterized in that it includes a generator (G) for generating the said reference threshold (qo) as a function of the said air speed (Vair).

6. Cyclic stick system according to Claim 5, characterized in that the said reference threshold (qo) is inversely proportional to the air speed (Vair).

7. Cyclic stick system according to Claim 5, characterized in that the said reference threshold (qo) is constant at low speed of the said helicopter (He) and is inversely proportional to the said air speed (Vair) for high speeds of the said helicopter (He).

8. Cyclic stick system according to any one of Claims 1 to 7, characterized in that it additionally includes:
- second comparison means (CP2) making it possible continuously to compare the said second electrical signal (p) representative of the displacements of the said attachment point with at least one reference threshold (po) representative of at least one nearby position of an end stop of the travel of the said cyclic stick; and
- a second controllable switch (I2) interposed on the said link, downstream of the said first switch, and driven open by the said second comparison means (CP2) in the case in which the value of the said second electrical signal (p) exceeds the said reference threshold (po).

9. Cyclic stick system according to any one of Claims 1 to 8, for a helicopter (He) provided with a fly-by-wire system (CDV), characterized in that the said cyclic stick system is at least partly integrated into the said fly-by-wire system (CDV).

10. Cyclic stick system according to Claim 9, for a helicopter (He) in which the said fly-by-wire system (CDV) includes an automatic pilot device (CDVA) intended to provide automatic hold for the said helicopter about the piloting axis corresponding to the said direction of displacement (F1 or F2) of the said cyclic stick, characterized in that it additionally includes:
- a detector (CP3) of the status of human piloting or of the status of automatic piloting of the said helicopter about the said piloting axis; and
- a two-channel router (AIG) interposed on the said link, downstream of the said first switch (I1) and controlled by the said detector (CP3), either to provide the continuity of the said link, or to link the said automatic pilot device (CDVA) to the said motor (M).

11. Cyclic stick system according to Claim 10, characterized in that the said detector is formed by third comparison means (CP3) making it possible continuously to compare, with a reference threshold (do), the said difference (d) between the said first and second electrical signals (cy and p), the said third comparison means (CP3) controlling the said router (AIG) so that the latter provides, on the one hand, continuity of the said link (K1) when the said difference (d) is above the said reference threshold (do) and, on the other hand, connection of the said automatic pilot device (CDVA) to the said motor (M) when the said difference (d) is below the said reference threshold (do).

12. Cyclic stick system according to one of Claims 1 to 11, characterized in that it is provided for the said direction of displacement (F1) of the said cyclic stick corresponding to piloting in pitch.

13. Cyclic stick system according to one of Claims 1 to 12, characterized in that it is provided for the direction (F2) of the said cyclic stick corresponding to piloting in roll.
